# EUROPÄISCHE PATENTSCHRIFT

(11) **EP 2 916 984 B1**
(45) Veröffentlichungstag und Bekanntmachung des Hinweises auf die Patenterteilung: **08.07.2020**
(21) Anmeldenummer: 13824096.5
(22) Anmeldetag: 07.11.2013
(51) Int. Cl.: B23C 3/00, B23C 3/12, B24B 23/00, B23B 5/16, B24B 9/00, B23Q 9/00, B24B 23/08

(54) **VORRICHTUNG ZUM HALTEN EINER FRÄS- UND/ODER SCHLEIFMASCHINE**
DEVICE FOR HOLDING A MILLING AND/OR GRINDING MACHINE
DISPOSITIF DE MAINTIEN POUR FRAISEUSE ET/OU RECTIFIEUSE

(30) Priorität: 07.11.2012 DE 102012110681
(43) Veröffentlichungstag der Anmeldung: 16.09.2015
(73) Patentinhaber: Rieth, Stephan, 66606 St. Wendel (DE)
(72) Erfinder: Rieth, Stephan, 66606 St. Wendel (DE)
(74) Vertreter: Patentanwälte Bernhardt / Wolff Partnerschaft mbB
(86) Internationale Anmeldenummer: PCT/DE2013/100376
(87) Internationale Veröffentlichungsnummer: WO 2014/071923

(56) Entgegenhaltungen:
- EP-A2- 1 295 659
- WO-A1-2005/095052
- WO-A1-2006/119548
- DE-A1-102004 031 756
- JP-A- 2002 052 402
- US-A- 3 164 062
- US-A- 3 553 904
- US-A- 3 613 320
- US-A- 3 712 174
- US-A- 4 180 358
- US-A- 5 076 025
- US-A- 5 884 379

## Beschreibung

Die Erfindung betrifft eine Vorrichtung zum Halten einer Fräs- und/oder Schleifmaschine, insbesondere einer Handfräs- und/oder -schleifmaschine, in einer Position zur Bearbeitung einer Kante an einem Ende eines Rohres, die zumindest eine drehbare Rolle aufweist, die an der Rohrinnenseite oder der Rohraußenseite anlegbar ist und mittels derer ein Verbindungsteil der Haltevorrichtung, an dem sich ein Gehäuse der Fräs- und/oder Schleifmaschine anordnen lässt, entlang der Kante bewegbar ist.

Aus US 3 164 062 A, US 3 553 904 A, US 3 712 174 A, US 4 180 358 A, und WO 2006/095 052 A1 sind Vorrichtungen bekannt, die zum Halten einer Fräs- und/oder Schleifmaschine zur Bearbeitung einer Kante eines Rohrs vorgesehen sind. Die Fräs- und/oder Schleifmaschine wird drehfest an der Haltevorrichtung angeordnet und zur Bearbeitung der Kante zusammen mit dieser derart kreisförmig bewegt, dass ein Fräs- oder Schleifkopf entlang der Kante geführt wird.

Die WO 2006/119 548 A1 beschreibt eine Einrichtung zum Fasen von Rohrkanten, die dazu vorgesehen ist, am Ende eines Rohrs mittels Rollen sowohl an der Innenals auch an der Außenseite des Rohrs angesetzt zu werden und eine in der Einrichtung drehbar gelagertes Trennwerkzeug umfasst. Das Trennwerkzeug lässt sich betätigen, in dem an eine Antriebswelle eine Bohrmaschine oder ein anderer Motor angesteckt wird.

Bei einer aus JP 2002 052 402 A bekannten Fräsvorrichtung ist eine Bewegungseinrichtung vorgesehen, die antreibbare Rollen umfasst, die zum Vorbeibewegen einer zu bearbeitenden Kante eines zwischen den Rollen eingespannten Rohres an einem ortsfest angeordneten Fräskopf vorgesehen sind.

Eine aus DE 10 2004 013 756 A1 bekannte Fräsvorrichtung ist zur Bearbeitung einer in Umfangsrichtung umlaufenden Schweißnaht, die zwei Rohre miteinander verbindet, vorgesehen. Dokument DE 10 2004 031756 A1 offenbart eine Vorrichtung gemäß dem Oberbegriff des Patentanspruchs 1.

Aus der WO 2007/122351 A1 und aus der FR 2802134 sind stationäre Fräsvorrichtungen mit einem stationären Teil, an dem das Rohr eingespannt wird, und einem an dem stationären Teil gelagerten drehbaren Teil, an dem die Fräsmaschine befestigt wird, bekannt. Zur Bearbeitung des Rohrs wird die Fräsmaschine mittels des drehbaren Teils unter Führung des Fräskopfs der Fräsmaschine entlang der Kante bewegt.

Eine weitere Haltevorrichtung, an dem sich eine Fräsmaschine mittels einer Halteklammer festklemmen lässt, geht aus der US 3,613,320 hervor.

Der Erfindung liegt die Aufgabe zugrunde, eine Vorrichtung der eingangs genannten Art zu schaffen, die einfacher und flexibler zu handhaben ist.

Erfindungsgemäß wird diese Aufgabe dadurch gelöst, dass die Haltevorrichtung zur drehbaren Lagerung der Fräs- und/oder Schleifmaschine im Verhältnis zu der Haltevorrichtung um dieselbe Achse um die ein in der Haltevorrichtung anzuordnender Fräs- oder Schleifkopf der Fräs- und/oder Schleifmaschine drehbar ist, unter Bearbeitung der Kante in der Bearbeitungsposition vorgesehen ist.

Zur Bearbeitung der Kante wird die Rolle an das Rohr angelegt und die Haltevorrichtung anschließend entlang der Kante des Rohrs bewegt.

Dabei stützt sich die Haltevorrichtung an dem Rohr und dient als Führung bei der Bewegung der Fräs- und/oder Schleifmaschine entlang der Kante. Die Haltevorrichtung kann einen Fräs- oder Schleifkopf der Fräs- und/oder Schleifmaschine in konstantem Abstand zu der Kante halten, wodurch eine gleichmäßige und präzise Bearbeitung der Kante, z.B. bei der Bildung von Fasen oder beim Abschleifen der Kanten, besonders einfach möglich wird.

Darüber hinaus trägt das Rohr das Gewicht der Haltevorrichtung. Dadurch wird die Bearbeitung der Kante mittels einer Handfräs- und/oder Schleifmaschine vereinfacht. Da zum Halten der Haltevorrichtung und insbesondere der Fräs- und/oder Schleifmaschine keine Kraft mehr aufgebracht werden muss, wird die Arbeit erheblich erleichtert.

Die Haltevorrichtung kann verhältnismäßig klein und leicht ausgebildet sein, sodass mit der Erfindung eine gut transportable Vorrichtung geschaffen wird, die sich schnell und einfach einsetzen lässt und besonders gut mit der genannten Handfräs- und/oder-schleifmaschine kombinieren lässt. Die Haltevorrichtung eignet sich demnach besonders gut zur Verwendung mit einer mobilen Fräs- und/oder Schleifmaschine.

Es versteht sich, dass sich die Haltevorrichtung insbesondere zur Bearbeitung von Rohren mit rundem, insbesondere kreisrundem Querschnitt, eignet.

Vorteilhaft muss die Fräs- und/oder Schleifmaschine aufgrund der erfindungsgemäßen drehbaren Lagerung beim Bearbeiten der Kante, bei der die Fräsvorrichtung kreisförmig bewegt wird, dabei selbst nicht mehr mitgedreht werden. Vielmehr dreht sich die Fräs- und/oder Schleifmaschine bei Durchführung der kreisförmigen Bewegung gegenüber der Haltevorrichtung. Die Fräs- und/oder Schleifmaschine kann dann besonders komfortabel derart bewegt werden, dass zwar mit dem Fräskopf oder Schleifkopf die kreisförmige Bewegung durchgeführt wird, die Fräs- und/oder Schleifmaschine aber ihre Ausrichtung im Raum beibehält. Vorteilhaft muss dann zur vollständigen Bearbeitung der Kante nicht mit den Händen an Griffen der Vorrichtung, insbesondere der Fräs- und/oder Schleifmaschine bzw. zwischen einem der Griffe der Fräs- und/oder Schleifmaschine und der Handkurbel, umgegriffen werden.

Zweckmäßigerweise weist die Haltevorrichtung zumindest zwei der Rollen auf und die Rollen sind gleichzeitig an der Rohrinnenseite und/oder der Rohraußenseite anlegbar. Vorzugsweise ist die Haltevorrichtung derart vorgesehen, dass die Rollen gleichzeitig lediglich an der Rohrinnenseite, lediglich an der Rohraußenseite oder an der Rohrinnenseite und an der Rohraußenseite anlegbar sind.

Eine besonders stabile Anordnung der Vorrichtung an dem Rohr lässt sich erreichen, wenn bei Anlage der Rollen an dem Rohr zumindest an der Rohrinnenseite oder an der Rohraußenseite zwei der Rollen vorgesehen sind.

In einer Ausführungsform der Erfindung umfasst die Vorrichtung eine an dem Fräskopf oder dem Schleifkopf anzuordnende zusätzliche Stützrolle, die um eine zur Drehachse des Fräskopfs oder des Schleifkopfs koaxiale Drehachse drehbar ist und mittels derer die Vorrichtung am Rohr abstützbar ist. Zweckmäßigerweise ist die Stützrolle auf der Seite des Fräskopfs bzw. des Schleifkopfs angeordnet, die der Seite des Fräskopfs bzw. des Schleifkopfs abgewandt ist, an welcher eine den Fräskopf bzw. den Schleifkopf tragende Welle der Fräs- und/oder Schleifmaschine angeordnet ist.

In einer Ausgestaltung der Erfindung ist der Abstand der Rollen voneinander verstellbar. Die Haltevorrichtung lässt sich an die Größe des Durchmessers sowie die Dicke des zu bearbeitenden Rohrs anpassen. Insbesondere wenn der Abstand der Rollen stufenlos verstellbar ist, lassen sich die Rollen unter Spannung gegeneinander an dem Rohr anordnen.

In einer besonders bevorzugten Ausführungsform der Erfindung weist die Haltevorrichtung eine Einrichtung zur Verstellung der Position der Rollen auf, die von Hand, motorisch, vorzugsweise elektromotorisch, hydraulisch oder pneumatisch, beispielsweise über ein Spindelgetriebe verstellbar, bedienbar ist.

In einer Ausgestaltung der Erfindung umfasst die Verstelleinrichtung einen Hebelarm, der zumindest eine der Rollen trägt und der im Verhältnis zu der anderen Rolle bzw. den anderen Rollen bewegbar ist. Zweckmäßigerweise ist für den Hebelarm ein Stellglied vorgesehen, mittels dessen sich die an dem Hebelarm angeordnete Rolle unter Bewegung des Hebelarms gegen das Rohr drücken lässt, bis sowohl diese Rolle als auch die andere Rolle, ggf. die anderen Rollen, unter Spannung an dem Rohr anliegen.

Alternativ oder ergänzend dazu kann die Verstelleinrichtung zumindest zwei an einem Schlitten der Haltevorrichtung angeordnete Trägerelemente aufweisen, an denen zumindest je eine der Rollen befestigt ist und deren Abstand zueinander, vorzugsweise geradlinig, mittels eines Stellglieds verstellbar ist. Zur Anordnung der Vorrichtung an dem Rohr werden die Trägerelemente in einen derartigen Abstand gebracht, dass die Rollen unter Spannung an dem Rohr anliegen.

Zweckmäßigerweise umfasst die Verstelleinrichtung eine Stellfeder, mittels derer auf die Rollen eine Kraft ausgeübt werden kann. Die Stellfeder ist dazu vorgesehen unter Druck- oder Zugbelastung auf den Hebelarm oder die Trägerelemente zuwirken. Je nach Anordnung der Rollen auf der Außen- oder Innenseite ist sie derart vorgesehen, den Hebelarm zu betätigen bzw. die Trägerelemente zusammenziehen oder auseinander drücken, sodass die Rollen an das Rohr gedrückt werden. Vorteilhaft können durch die Stellfeder darüber hinaus nach Art eines Stoßdämpfers ggf. an dem Rohr vorhandene Unebenheiten ausgeglichen werden, über die die Rollen bei der Bearbeitung der Kante bewegt werden.

In einer weiteren Ausführungsform der Erfindung weist die Haltevorrichtung eine Einrichtung zu ihrer Befestigung an der Rohrinnenseite auf.
Vorteilhaft bildet die Befestigungseinrichtung für die Haltevorrichtung und damit für die Fräs- und/oder Schleifmaschine einen Bezugspunkt in Richtung der Rohrsymmetrieachse. Ferner lässt sich die Haltevorrichtung einfach an dem Rohr befestigen, ohne dass sie bei der Bearbeitung der Kante stört. Dies wird unter anderem dadurch erreicht, dass die Befestigungseinrichtung, wie es in einer besonders bevorzugten Ausgestaltung der Erfindung vorgesehen ist, im Abstand von der zu bearbeiteten Kante auf der Rohrinnenseite angreift. Ein Fräs- bzw. Schleifkopf der Fräs- und/oder Schleifmaschine und die Rolle können bei Bearbeitung der Rohrkante entlang der Rohrinnenseite und/oder der Rohraußenseite bewegt werden, ohne an der Befestigungseinrichtung anzustoßen.

Es ist vorstellbar, die letztgenannte Ausführungsform auch für eine Vorrichtung zum Halten einer Fräs- und/oder Schleifmaschine, insbesondere einer Handfräs- und/oder -schleifmaschine, in einer Position zur Bearbeitung einer Kante an einem Ende eines Rohres vorzusehen, die nicht mit der erfindungsgemäßen, an der Rohrinnenseite oder der Rohraußenseite anzulegenden Rolle versehen ist.

Zweckmäßigerweise ist die Befestigungseinrichtung zur Verklemmung der Haltevorrichtung an der Rohrinnenseite eingerichtet.

In einer Ausgestaltung der Erfindung umfasst die Haltevorrichtung ein Mittel zur Drehung des genannten Verbindungsteils, an dem die Fräs- und/oder Schleifmaschine anzuordnen ist, um die Rohrsymmetrieachse, um eine Bearbeitung der Kante des Rohrs zu ermöglichen.

Das Drehungsmittel weist zweckmäßigerweise einen Führungskörper auf, an dem die Befestigungseinrichtung angeordnet ist, wobei das Verbindungsteil vorzugsweise um den Führungskörper herum entlang der Kante bewegbar ist.

Die Befestigungseinrichtung umfasst zweckmäßigerweise zumindest zwei, vorzugsweise zumindest drei, Klemmelemente zur Abstützung der Haltevorrichtung an der Rohrinnenseite. Insbesondere wenn die Klemmelemente in gleichgroßen Winkeln zueinander von dem Führungskörper vorstehen, wird eine zentrierte Befestigung der Haltevorrichtung in dem Rohr möglich.

Zweckmäßigerweise sind die Klemmelemente zur Verklemmung der Haltevorrichtung in radialer Richtung von dem Führungskörper weg bewegbar. Die Klemmelemente können dazu von dem Führungskörper ausfahrbar oder wegklappbar sein. Sie umfassen dazu vorzugsweise eine Parallelogrammführung, einen Scherenspanner, einen ausklappbaren Hebelrahmen, welcher vorzugsweise mit einer Hebelseite mittels des Führungskörpers betätigbar und mit der anderen Hebelseite an der Rohrinnenseite anlegbar ist, und/oder einen Linearmotor zum Ausfahren eines Klemmglieds.

Um eine zentrierte Anordnung der Befestigungseinrichtung im Rohrinneren zu erreichen, ist die Befestigungseinrichtung zweckmäßigerweise derart eingerichtet, dass auf der Rohrinnenseite anzusetzende Stützglieder der Klemmelemente auch in unterschiedlichen Positionen stets in gleichgroßem radialem Abstand von dem Führungskörper angeordnet sind.

In einer Ausgestaltung der Erfindung ist die Haltevorrichtung zur Anordnung der Rolle an dem Rohr unter Spannung vorgesehen. Dadurch lässt sich sicherstellen, dass die Fräsmaschine beim Fräsen der Kante stets im selben Abstand zu der Seite des Rohrs, an der die Rolle anliegt geführt ist.

Zweckmäßigerweise ist zur Aufbringung der Spannung zwischen der Befestigungseinrichtung und der Rolle eine Feder vorgesehen, mittels derer sich die Rolle gegen das Rohr drücken lässt. Die Feder ist vorzugsweise zwischen einem Tragelement an dem die Befestigungseinrichtung befestigt ist, und dem Verbindungsteil, an dem die Rolle angeordnet ist, vorgesehen.

Zweckmäßigerweise weist die Haltevorrichtung ein Verbindungsteil auf, an dem die Fräs- und/oder Schleifmaschine an der Haltevorrichtung befestigbar ist und das dazu mit entsprechenden Befestigungsmitteln versehen ist.

In der bevorzugten Ausführungsform der Erfindung ist der Abstand zwischen dem genannten Schlitten und dem Verbindungsteil, verstellbar. Durch Veränderung dieses Abstands lässt sich regulieren, wieviel Material bei der Bearbeitung der Kante abgetragen wird.

In einer weiteren Ausgestaltung der Erfindung ist die Position des in der Haltevorrichtung anzuordnenden Fräskopfs oder Schleifkopfs, insbesondere in Richtung der Drehachse des Fräskopfs oder Schleifkopfs und/oder senkrecht dazu, verstellbar. Auch durch Verstellung der Position des Fräskopfs oder Schleifkopfs lässt sich die Größe einer mittels eines Fräskopfs oder Schleifkopfs zu erreichenden Materialabtragung, z.B. die Größe der Fase, verändern. Zweckmäßigerweise ist zur Verstellung der Position des Fräskopfs oder des Schleifkopfs in Richtung der Drehachse die Position des Verbindungsteils im Verhältnis zu einem Gehäuse der Fräs- oder der Schleifmaschine verstellbar. In einer Ausführungsform ist dazu das Verbindungsteil über ein Gewinde, mittels dessen sich die Position verändern lässt, mit der Fräs- und/oder Schleifmaschine verbunden.

Besonders vorteilhaft an den genannten Möglichkeiten zur Verstellung ist, dass zu Beginn der Bearbeitung die Haltevorrichtung schon in ihrer endgültigen Bearbeitungsposition an dem Rohr angeordnet und der Fräskopf oder Schleifkopf unter Materialabtrag an der Kante in die zur endgültigen Bearbeitung vorgesehene Arbeitsposition bewegt werden kann, um anschließend entlang der Kante geführt zu werden.

In der bevorzugten Ausgestaltung der Erfindung ist das genannte Stellglied zur Verstellung sowohl des Abstands der Trägerelemente voneinander als auch des Abstands des genannten Schlittens von der Verbindungseinrichtung vorgesehen. Vorteilhaft lässt sich die Vorrichtung mittels des Stellglieds an das Rohr spannen und ferner der Fräskopf oder Schleifkopf in die Bearbeitungsposition bringen. Zweckmäßigerweise sind dazu zwischen den Trägerteilen sowie zwischen dem Schlitten und der Verbindungseinrichtung Zustellfedern vorgesehen, die mit unterschiedlichen Kräften auf die Trägerteile bzw. den Schlitten und die Verbindungseinrichtung wirken. Dadurch wird erreicht, dass bei Betätigung des Stellglieds unter Verbiegung der Zustellfeder zwischen den Trägerteilen zuerst die Rollen an das Rohr gedrückt werden und erst danach unter Verbiegung der Zustellfeder und zwischen dem Schlitten und der Verbindungseinrichtung der Fräskopf oder Schleifkopf in die Bearbeitungsposition gebracht wird.

Es versteht sich, dass die Vorrichtung von Hand entlang der Kante bewegt werden und die Vorrichtung dazu ggf. mit gesonderten Griffen versehen sein kann.

Die Bearbeitung der Kante mit der Vorrichtung wird allerdings erheblich erleichtert, wenn zur Bewegung der Vorrichtung entlang der Kante für zumindest eine der Rollen ein Antrieb vorgesehen ist. Während es vorstellbar wäre, als Antrieb einen gesonderten Motor vorzusehen, ist die Vorrichtung in der bevorzugten Ausführungsform der Erfindung mit einer von Hand betätigbaren Kurbel versehen. Bei der Bearbeitung der Kante mittels der mit der Handfräs- und/oder Schleifmaschine versehenen Vorrichtung kann die Handfräs- und/oder Schleifmaschine mit einer Hand an ihrem Griff gehalten und mit der anderen Hand die Kurbel betätigt werden. Vorteilhaft kann die Handfräs- und/oder Schleifmaschine, wenn ein Schalter zum Ein- oder Ausschalten der Handfräs- und/oder Schleifmaschine an dem Griff oder in der Nähe des Griffs angeordnet ist, ein- und ausgeschaltet werden. Dadurch lässt sich die Vorrichtung sicherer handhaben.

Alternativ kann zum Antrieb der Rolle ein eigener Motor, vorzugsweise ein Elektromotor, vorgesehen sein.

In einer weiteren Ausführungsform der Erfindung kann als Antrieb zur Bewegung der Vorrichtung ein Gurt oder eine Kette vorgesehen sein, die einerseits um das Rohr herum und andererseits um eine Antriebsrolle der Haltevorrichtung herumgelegt ist. Durch Drehen der Rolle lässt sich die Vorrichtung an dem Gurt bzw. der Kette um das Rohr herumziehen.

Die Fräs- und/oder Schleifmaschine ist in der Haltevorrichtung drehbar angeordnet.

Zweckmäßigerweise ist ein die Drehbewegung ermöglichendes Drehlager an einem rohrartig geformten Gehäuseteil der Fräs- und/oder Schleifmaschine vorgesehen, das eine den Fräskopf oder Schleifkopf tragende Welle umgibt.

Die Erfindung wird nachfolgend anhand von Ausführungsbeispielen und den beiliegenden, sich auf die Ausführungsbeispiele beziehenden Zeichnungen näher erläutert. Es zeigen:
- Fig. 1: eine erfindungsgemäße Vorrichtung in perspektivischer Ansicht,
- Fig. 2: die Vorrichtung nach Fig. 1 in weiteren Ansichten,
- Fig. 3: die Vorrichtung nach Fig. 1 in verschiedenen Ansichten, wobei Bauteile an der Vorrichtung zur Kenntlichmachung der Funktionsweise unterschiedlich schraffiert sind,
- Fig. 4: eine weitere erfindungsgemäße Vorrichtung in perspektivischer Ansicht,
- Fig. 5: eine weitere erfindungsgemäße Vorrichtung in verschiedenen Ansichten sowie in einer Detailansicht,
- Fig. 6: eine weitere erfindungsgemäße Vorrichtung in verschiedenen Ansichten,
- Fig. 7: eine weitere erfindungsgemäße Vorrichtung in verschiedenen Ansichten,
- Fig. 8: die Vorrichtung nach Fig. 7 in einer anderen Stellung in verschiedenen Ansichten,
- Fig. 9: eine weitere erfindungsgemäße Vorrichtung in verschiedenen Ansichten,
- Fig. 10: eine weitere erfindungsgemäße Vorrichtung in verschiedenen Ansichten,
- Fig. 11: die Vorrichtung nach Fig. 1 in verschiedenen Arbeitspositionen an einem Rohr,
- Fig. 12: eine weitere erfindungsgemäße Vorrichtung in verschiedenen Ansichten,
- Fig. 13: die Vorrichtung nach Fig. 12 in verschiedenen Ansichten, und
- Fig. 14: die Vorrichtung nach Fig. 1 in verschiedenen Ansichten in einer Arbeitsposition an einem Rohr.

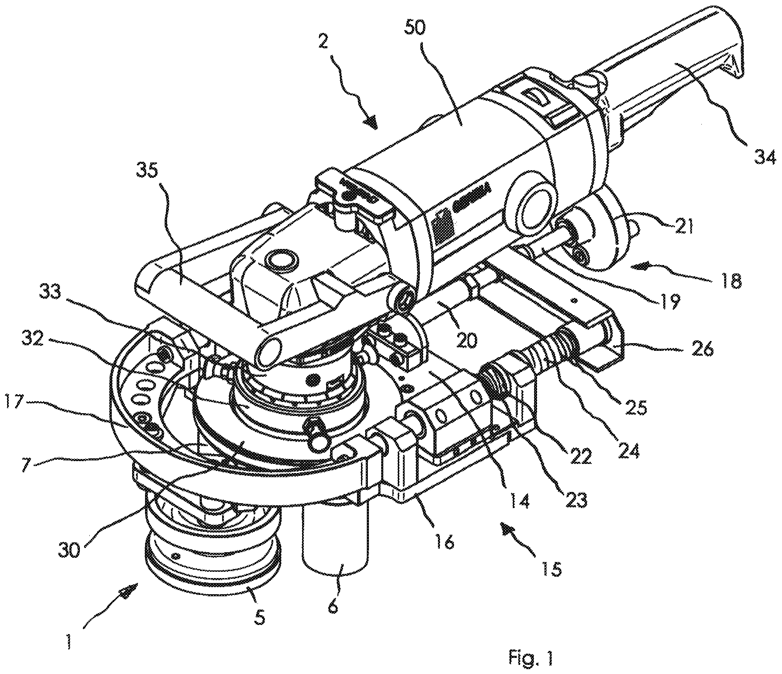

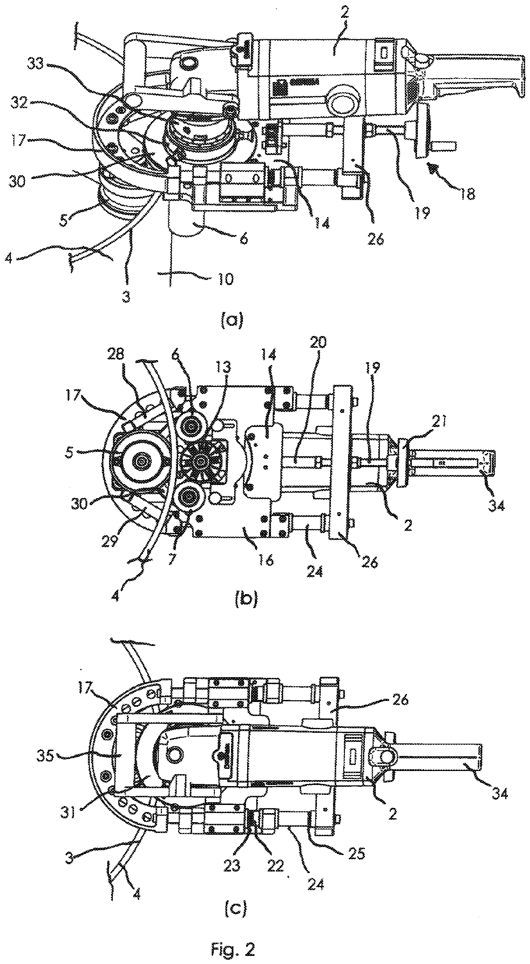

In den Figuren 1 und 2 ist eine erfindungsgemäße Haltevorrichtung 1 für eine Handfräsmaschine 2 dargestellt.

Zwischen zwei Griffen 34,35 der Handfräsmaschine 2 ist ein den Antrieb der Handfräsmaschine 2 aufnehmendes Gehäuse 50 vorgesehen. Über ein Getriebe ist mit dem Antrieb der Handfräsmaschine 2 eine hier nicht gezeigte Welle verbunden, die einen in Fig. 2b gezeigten konischen Fräskopf 13 trägt. Um die Welle herum ist ein rohrartiger Gehäuseabschnitt 32 vorgesehen, an dessen unteren Ende ein Stützring 30 angeordnet ist. Der rohrartige Gehäuseabschnitt 32 ist an einem weiteren, fest mit dem Gehäuse 50 verbundenen Rohrabschnitt 33 höhenverstellbar angeordnet, sodass sich die Position des Stützrings 30 im Verhältnis zu dem Fräskopf 13 verändern lässt.

Der rohrartige Gehäuseabschnitt 32 und der Rohrabschnitt 33 können über ein Gewinde miteinander verbunden sein, sodass sich durch Verdrehen des rohrartigen Gehäuseabschnitts 32 gegenüber dem Rohrabschnitt 33 die Position des Fräskopfs 13 im Verhältnis zu der Haltevorrichtung 1 verändern lässt.

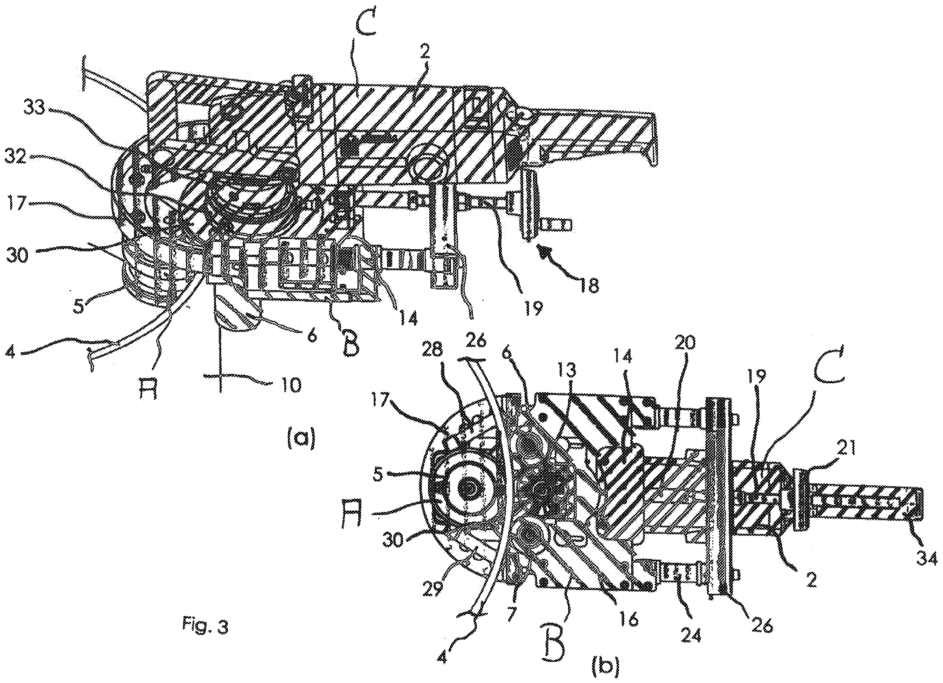

Ein Verbindungsteil 14 der Haltevorrichtung 1 ist mit dem rohrartigen Gehäuseabschnitt 32 verbunden. Wie den Fig. 3a und b anhand unterschiedlicher Schraffierungen zu entnehmen ist, bildet die Fräsmaschine 2 gemeinsam mit dem Verbindungsteil 14 eine Einheit C.

An dem Verbindungsteil 14 ist eine Spindel angeordnet, die ein mit einem Innengewinde versehenes Rohr 20 umfasst, in dem eine Stange 19 angeordnet ist, die in dem Bereich, in dem sie in dem Gewinderohr 20 geführt ist, mit einem zu dem Innengewinde passenden Gewinde versehen ist. Am Ende der Stange 19 ist ein Drehgriff 21 vorgesehen. Etwa in ihrer Mitte ist die Stange 19 in einer Buchse 27 drehbar gelagert, die mit einer Verbindungsleiste 26 verbunden ist.

Die Spindel kann als Kugelumlaufspindel (Kugelgewindetrieb) ausgebildet sein, wobei die Stange 19 als Kugelgewindestange und das Innengewinde des Rohrs 20 als Kugelumlaufinnengewinde ausgestaltet ist.

An ihren beiden Enden ist die Verbindungsleiste 26 über Spiralfedern 25 mit einem Trägerteil 16 eines Schlittens 15 verschiebbar verbunden, welcher Rollen 6,7 trägt. Die Verbindung zwischen der Verbindungsleiste 26 und dem Trägerteil 16 ist durch Rohre 24 gebildet, von denen ein Ende an dem Verbindungsglied 26 und eines an dem Trägerteil 17 befestigt ist und die um die Rohren 24 herum angeordnet ist.

Das Trägerelement 16 bildet gemeinsam mit den Rollen 6,7 die in den Fig. 3a und b gemeinsam schraffiert gezeigte Einheit B.

Das Trägerelement 16 ist über die Buchsen 22, die auf den Rohren 24 verschiebbar aufsitzen und Federn 23, die mit einer kleineren Kraft wirken als die Federn 25 und ebenfalls auf den Rohren 24 angeordnet sind, verschiebbar zu einem weiteren Trägerelement 17 verbunden, an dem eine Rolle 5 angeordnet ist.

Wie insbesondere Fig. 2b zu entnehmen ist, sind an dem Trägerelement 17 ferner Stützrollen 28,29 vorgesehen, deren Drehachsen senkrecht zu denjenigen der Rollen 5,6,7 angeordnet sind. Wie die Fig. 3a und b zeigen, bilden das Trägerelement 17, die Rolle 5,die Stützrollen 28,29, die Rohre 24, die Stange 19 und die Verbindungsleiste 26 eine Einheit A.

Zur Bearbeitung einer Kante 3 eines Rohrs 4 wird die Haltevorrichtung 1 derart eingestellt, dass die Rollen 5,6,7 über die Kante 3 greifen können und die Stützrollen 28,29 auf die Kante 3 aufgelegt.

Danach wird der Drehgriff 21 gegen die Kraft der Feder 23 betätigt, sodass die Einheit A gegenüber der Einheit B so weit verschoben wird, dass die Rolle 5 auf der Innenseite 9 und die Rollen 6,7 auf der Außenseite 10 des Rohrs 4 unter Spannung aufsitzen.

Anschließend wird die Fräsmaschine 2 eingeschaltet, sodass der Fräskopf 13 rotiert, und die Einheit C unter Drehen des Drehgriffs 21 gegen die Kraft der Feder 25 so weit bewegt, dass der Fräskopf 13 beginnt, eine Fase in der beabsichtigten Größe an der Kante 3 anzubringen. In der endgültigen Arbeitsposition wird die Stange 19 in ihrer Position in dem Rohr 20 festgestellt.

Anschließend wird die Vorrichtung entlang der Kante 3 des Rohrs 4 um das Rohr 4 herum bewegt, wobei die Rollen 5,6,7 sowie die Stützrollen 28,29 auf dem Rohr 4abrollen, und die Fase an der Kante 3 vollständig über den Umfang des Rohrs 4 eingebracht.

Zum Lösen der Vorrichtung wird die Stange 19 aus ihrer festgestellten Position gelöst. Die Feder 23 drückt zunächst den Fräskopf 13 von der Kante 3 weg, wobei sich die Stange 19 in dem Gewinderohr 20 dreht. Ferner drückt die Feder 25 die Einheiten A und B auseinander, sodass die Rollen 5,6,7 nicht mehr unter Spannung an dem Rohr 4 ansitzen und die Vorrichtung von dem Rohr 4 abgenommen werden kann.

Vorteilhaft kann die Vorrichtung bei der Bearbeitung der Kante 3 an dem Rohr 4 abgestützt werden. Das Rohr 4 trägt dann das Gewicht der Vorrichtung. Dies ist insbesondere dann von Vorteil, wenn die Rohrachse bei der Bearbeitung horizontal angeordnet ist. Ferner bildet die Haltevorrichtung 1 darüber hinaus eine Führung für die Fräsmaschine 2, sodass problemlos entlang der gesamten Kante 3 eine konstante Fasengröße eingebracht werden kann.

In der Ausführungsform der Vorrichtung nach den Fig. 1 bis 3 ist das Verbindungsteil 14 um dieselbe Drehachse, um die auch der Fräskopf 13 drehbar ist, an der Fräsmaschine 2 drehbar gelagert. Dazu ist der Stützring 30 drehbar an dem rohrartigen Gehäuseabschnitt 32 gelagert.

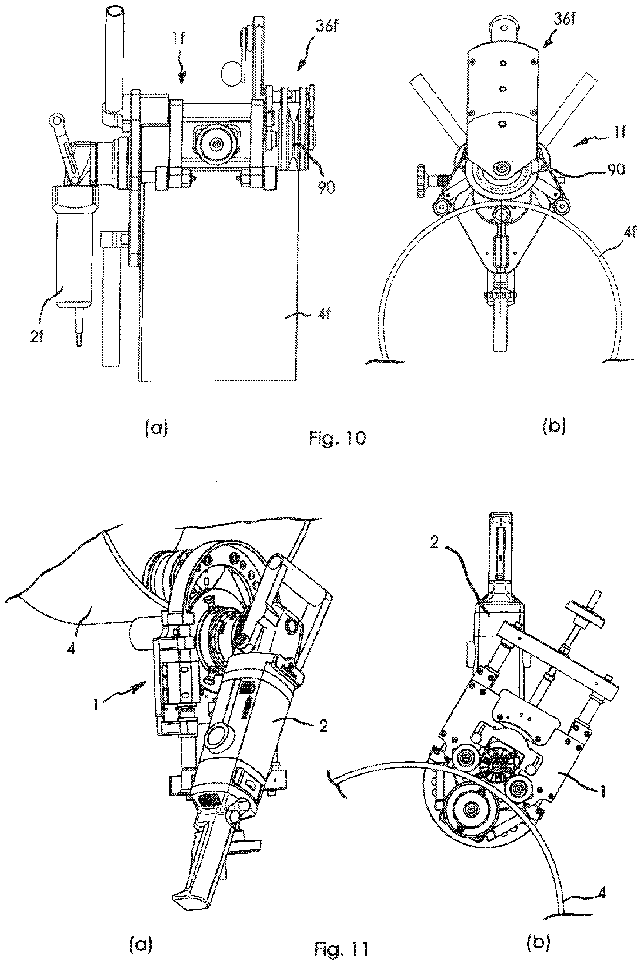

Vorteilhaft kann sich die Haltevorrichtung 1 bei Führung des Fräskopfs 13 entlang der Kante 3 gegenüber der Fräsmaschine 1 drehen. Die Fräsmaschine 1 kann dann beim Herumführen des Fräskopfs 13 in der gleichen Richtung ausgerichtet bleiben. Fig. 11 zeigt die Vorrichtung in verschiedenen Stellungen von Haltevorrichtung 1 zur Fräsmaschine 2. Dadurch wird die Bearbeitung der Kante 3 erheblich vereinfacht, da beim Herumführen der Vorrichtung um das Rohr mit den Händen nicht mehr an den Griffen 34,35 umgegriffen werden muss.

In einem weiteren, hier nicht gezeigten Ausführungsbeispiel ist ein Elektromotor zum Drehen der Stange 19 und damit zur Verstellung der Haltevorrichtung vorgesehen.

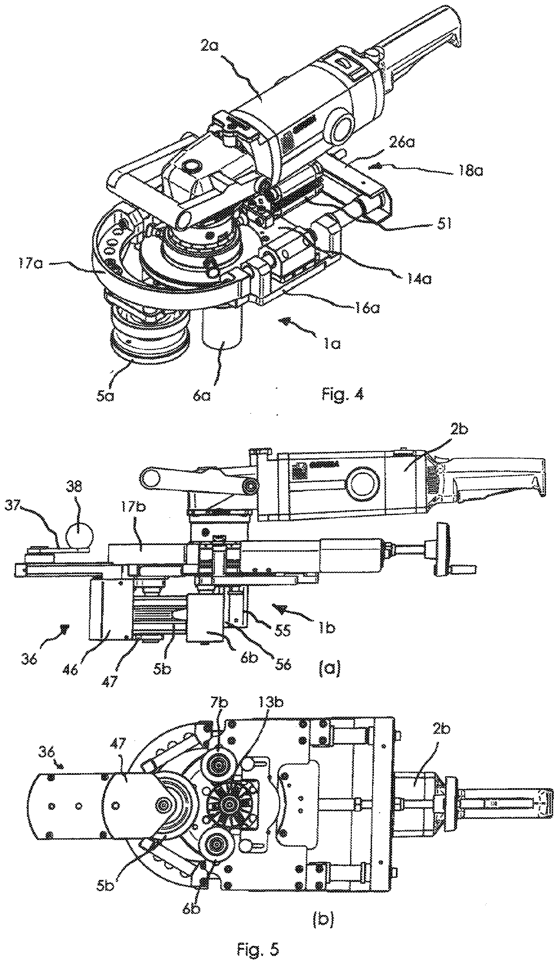

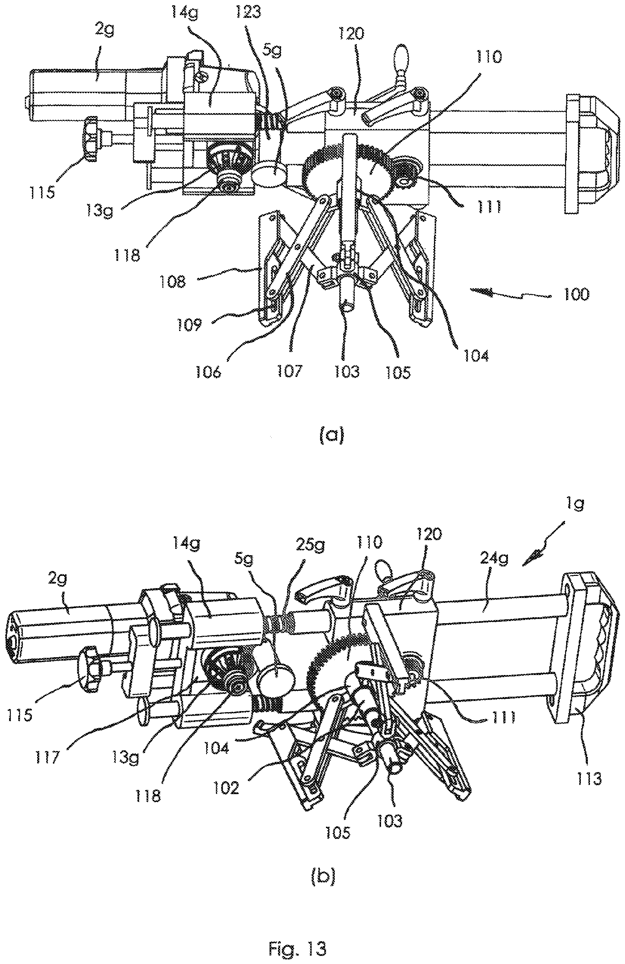

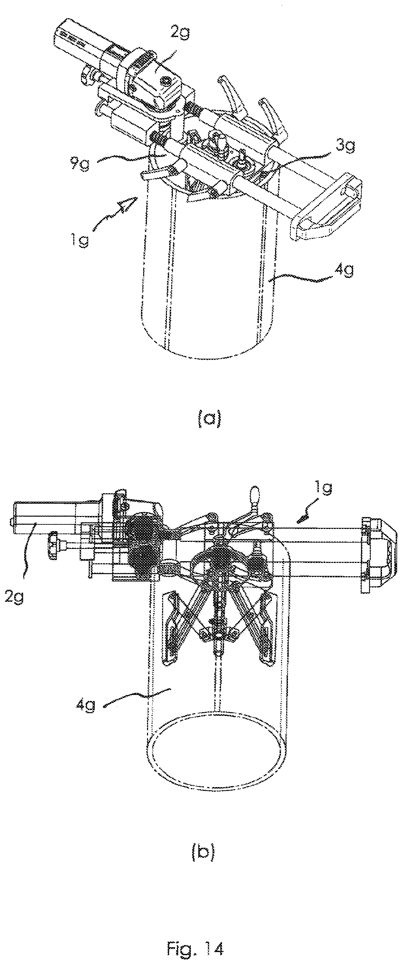

Es wird nun auf die Figuren 4 bis 14 Bezug genommen, wo gleiche oder gleichwirkende Teile mit derselben Bezugszahl wie in den Figuren 1 bis 3 bezeichnet sind und der betreffenden Bezugszahl jeweils ein Buchstabe beigefügt ist.

Die erfindungsgemäße Vorrichtung nach Fig. 4 unterscheidet sich von derjenigen nach den Fig. 1 bis 3 dadurch, dass eine Verstelleinrichtung 18a durch ein pneumatisches Stellglied 51 gebildet ist, mittels dessen eine Verbindungsleiste 26a an ein Verbindungsteil 14a einer Haltevorrichtung 1a herangezogen werden kann.

Durch Betätigung des pneumatischen Stellglieds 51 lässt sich die Vorrichtung wie oben für die Fig. 1 bis 3 beschrieben an einer Rohrkante anordnen. Dazu kann das pneumatische Stellglied 51 mit zwei Verstellstufen versehen sein, sodass, wie oben beschrieben, zunächst Rollen 5a,6a,7a der Rohrinnen- bzw. -außenseite angelegt werden und erst anschließend ein hier nicht gezeigter Fräskopf an die Kante herangeführt wird. Das Ansetzen der Rollen 5a,6a,7a und des Fräskopfs 13a kann aber auch in einem einzigen Schritt durchgeführt werden, wobei der Fräskopf 13a zweckmäßigerweise in Rotation versetzt ist.

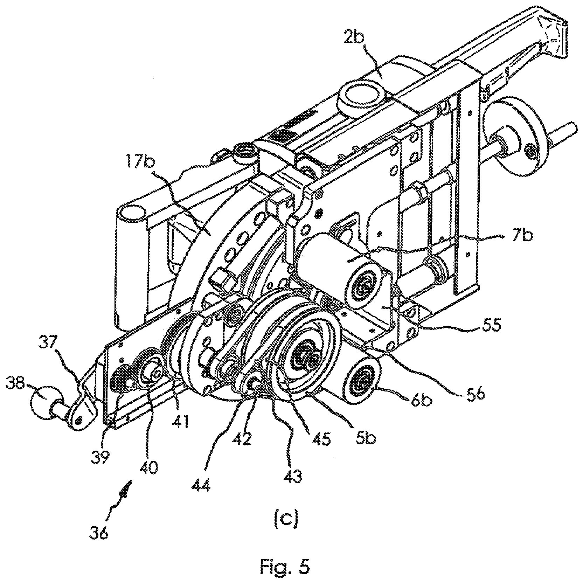

Die Vorrichtung nach Fig. 5 unterscheidet sich von derjenigen nach den Fig. 1 bis 3 dadurch, dass ein Antrieb 36 für eine Rolle 5b einer Haltevorrichtung 1b vorgesehen ist. Der Antrieb 36 ist mit einem Trägerelement 17b verbunden und umfasst eine Kurbel 37, die mit einem Drehknauf 38 versehen ist.

Wie insbesondere Fig. 5c zu entnehmen ist, die Details des Antriebs 36 zeigt, ist die Kurbel 36 über eine Welle mit einem Zahnrad 39 verbunden, das im Eingriff mit einem weiteren Zahnrad 40 mit größerem Durchmesser steht, welches wiederum im Eingriff mit einem weiteren Zahnrad 41 größeren Durchmessers ist. An dem Zahnrad 41 ist eine Welle 42 angeordnet, die Zugrollen 44 aufweist, um die herum Riemen 43 gelegt sind. Die Riemen 43 sind ferner in Nuten 45 eingelegt, die in einer Rolle 5b vorgesehen sind.

Die Kurbel 37 sowie die Zahnräder 39,40,41 sind an einer mit dem Trägerelement 17b verbundenen Halteplatte 46 angeordnet. An einer Unterseite des Antriebs 36 ist zur Verkleidung ein Blechstück 47 vorgesehen.

Ferner zeigen die Fig. 5a und c, dass an der Unterseite der Haltevorrichtung 1 b auf einer von den Rollen 6b,7b abgewandten Seite des Fräskopfs 13b ein Schutzblech 55 vorgesehen sein kann, um beim Fräsen anfallende Späne abzufangen. An dem Schutzblech können vorstehende Drahtbürsten 56 vorgesehen sein, die die Späne von den Rollen 6b,7b abstreichen.

Zur Bearbeitung einer Kante wird die Vorrichtung wie oben für die Fig. 1 bis 3 beschrieben auf ein Rohr aufgesetzt und eine Fräsmaschine 2b in Betriebsposition gebracht. Um die Vorrichtung entlang der Kante zu bewegen, wird die Kurbel 37 mittels des Knaufs 38 gedreht und dadurch die Rolle 5b in Drehung versetzt, sodass die Vorrichtung an dem Rohr entlang gerollt wird.

Es versteht sich, dass die Vorrichtungen nach den Fig. 1 bis 6 zur Bearbeitung der inneren Kante auch umgekehrt auf die Rohrkanten aufgesetzt werden können, d.h. die Rollen 5,5a,5b anstatt an der Innenseite des Rohrs 4 an dessen Außenseite.

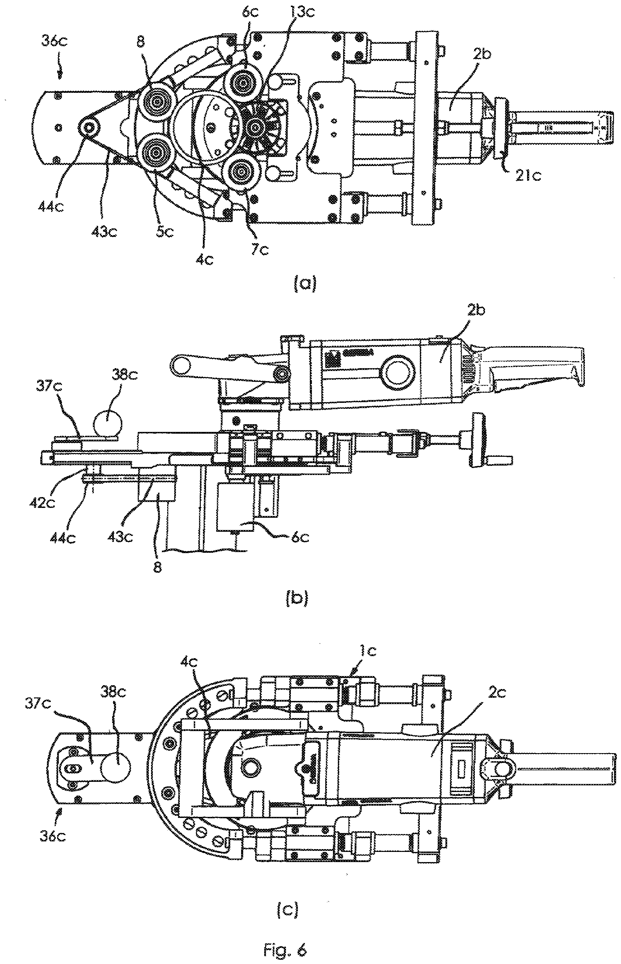

Bei dem in Fig. 6a gezeigten Ausführungsbeispiel ist eine erfindungsgemäße Vorrichtung anstatt mit drei mit vier Rollen 5c,6c,7c,8 versehen. Wie insbesondere Fig. 6a zu entnehmen ist, eignet sich diese Ausführungsform der Erfindung insbesondere für die Bearbeitung von Rohren mit verhältnismäßig kleinen Durchmessern. Zur Bearbeitung einer Kante 3c eines Rohrs 4c werden die Rollen 5c,6c,7c,8 auf die Außenseite des Rohrs 4c unter Spannung aufgesetzt. Eine Haltevorrichtung 1c der Vorrichtung wird dazu in gleicher Weise betätigt, wie dies oben für die Fig. 1 bis 3 beschrieben ist, wobei zunächst die Rollen 5c,6c,7c,8 unter Betätigung des Drehgriffs 21 auf der Außenseite des Rohrs 4c aufgespannt werden und anschließend ein Fräskopf 13c an die Kante des Rohrs 4c herangeschoben wird.

Ein Antrieb 36c zur Bewegung der Vorrichtung entlang der Kante unterscheidet sich von demjenigen nach Fig. 5 dadurch, dass ein Riemen 43c um die beiden Rollen 5c und 8 geführt ist und somit bei Betätigung einer Kurbel 37c die beiden Rollen 5c und 8 gedreht werden.

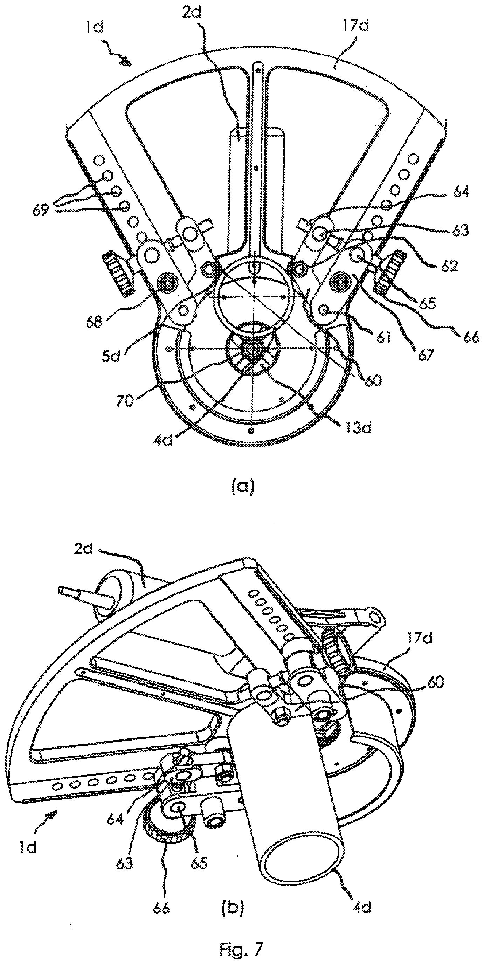

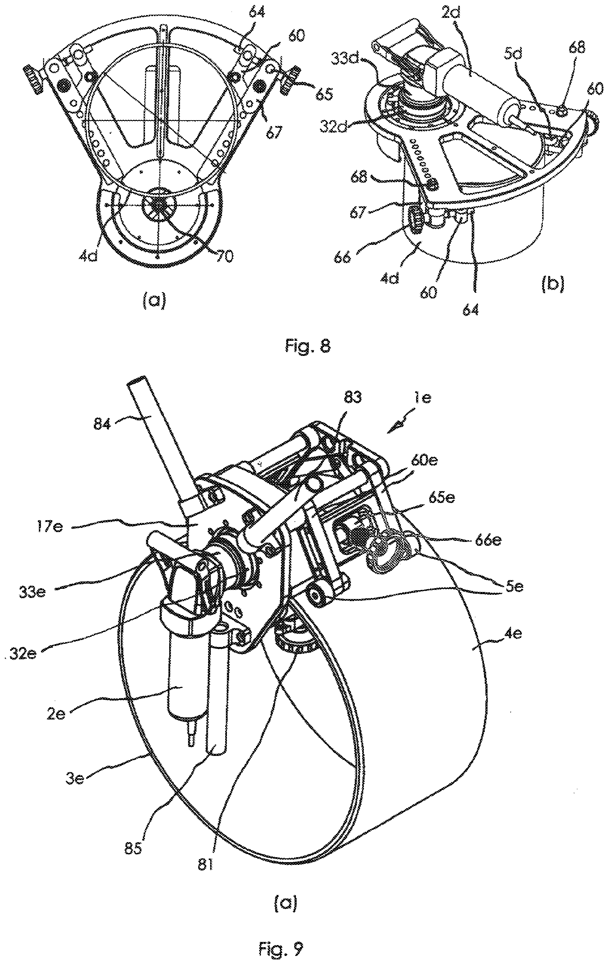

Die Fig. 7 und 8 zeigen eine weitere erfindungsgemäße Vorrichtung in zwei verschiedenen Einstellungen.

Die im Vergleich zu den oben gezeigten Ausführungsbeispielen etwas einfacher aufgebaute Vorrichtung nach den Fig. 7 und 8 weist eine Haltevorrichtung 1d mit einem Trägerteil 17d auf, an dem Hebeleinrichtungen angeordnet sind, die je einen gewinkelten Hebelarm 60 aufweisen. An einer Winklung des Hebelarms 60 ist an einer Drehachse 62 drehbar eine Rolle 5d,6d angeordnet. An seinem einen Ende ist der Hebelarm 60 in einem Drehlager 61 an einem Halteteil 67 angeordnet. An seinem anderen Ende ist eine drehbar aufgehängte Aufnahme für einen Gewindestift 64 vorgesehen. Der Gewindestift 64 ist an dem Halteteil 67 um eine Achse 65 drehbar aufgehängt und mit einem Drehknauf 66 versehen.

Das Halteteil 67 ist mit einer Bohrung versehen, durch die hindurch eine Schraube 68 führbar ist, um das Halteteil 67 in einer der Bohrungen 69 an dem Trägerelement 17d zu befestigen.

Wie insbesondere Fig. 7a und 8a zu entnehmen ist, ist auf einem Fräskopf 13d eine Handfräsmaschine 2d der Vorrichtung eine Rolle 70 angeordnet.

Zur Bearbeitung einer Kante des Rohrs 4d werden die Rollen 5d,6d unter Betätigung der Drehknaufe 66 und Bewegung der Hebelarme 60 in eine derartige Position gebracht, dass die Rollen 5d,6d,70 die Außenseite des Rohrs 4d umgreifen. Anschließend werden die Hebelarme 60 durch Drehung der Drehknaufe 66 der Gewindestifte 64 soweit verstellt, bis die Rollen 5d,6d,70 unter Spannung auf dem Rohr 4d aufsitzen. Anschließend wird die Fräsmaschine 2d eingeschaltet, sodass der Fräskopf 13d rotiert der Fräskopf 13 wird anschließend an die Kante herangeführt, indem ein rohrartiger Gehäuseabschnitt 32d gegenüber einem Rohrabschnitt 33d verdreht und dabei entlang einem diese verbindenden Gewinde bewegt wird.

Nach Bearbeitung der Kante lässt sich die Haltevorrichtung 1d wieder vom Rohr lösen, indem die Rollen 5d,6d unter Drehung des Drehknaufes 66 von dem Rohr wegbewegt werden.

Das Halteteil 7 kann unter Lösung der Schraube 68 und Versetzung des Halteteils 67 an eine der anderen Bohrungen 69 versetzt werden, um die Haltevorrichtung 1d an unterschiedliche Rohrradien und Rohrwanddicken anzupassen, wie anhand der unterschiedlichen Positionen der Hebeleinrichtungen in den Fig. 7 und 8 gezeigt ist.

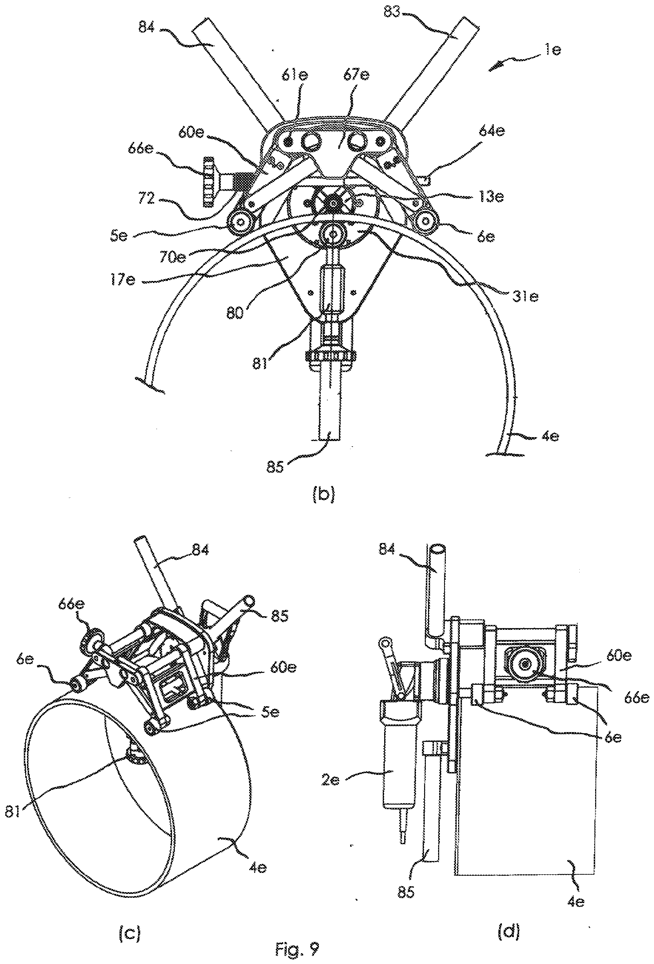

Bei einer Vorrichtung nach dem Ausführungsbeispiel nach Fig. 9 sind an einem Trägerelement 17e der Haltevorrichtung 1e, das mit einer Handfräsmaschine 2e verbunden ist, je zwei einander gegenüber angeordnete Hebelarme 60e vorgesehen, an deren Enden jeweils zwei Rollen 5e,6e zur Auflage auf einer Außenseite eines Rohrs 4e vorgesehen sind. Die Hebelarme 60e sind an einem Halteteil 67e in einem Drehlager 61e gelagert. Ihre Stellung an dem Halteteil 67e lässt sich mittels eines Gewindestifts 64e ändern, der mit den Hebelarmen 60e verbunden ist. Durch Verdrehen des Gewindestifts 64e mittels eines Handknaufs 66e lassen sich die Hebelarme 60e zusammenziehen oder auseinander drücken, wodurch sich die Stellung der Haltevorrichtung 1e und damit die Position eines Fräskopfs 13e zu dem Rohr 4e verändern.

Ferner kann optional an dem Trägerelement 17e in Abstand zu dem Fräskopf 13e verstellbar eine Rolle 80 angeordnet sein, die zur Anlage an einer Innenseite des Rohrs 4e vorgesehen ist. Mittels eines Stellglieds 81 lässt sich die Position der Rolle 80 im Verhältnis zu dem Fräskopf 13e verändern.

Auf dem Fräskopf 13e ist eine weitere Rolle 70e vorgesehen, die auf der gegenüberliegenden Seite des Rohrs 4e, an dem die Rolle 80 an dem Rohr 4e anliegt, anzuordnen ist.

An dem Gewindestift 64e ist eine Feder 73 vorgesehen, die eine gewisse Bewegung der Hebelarme 60e zueinander zulässt, sodass die Haltevorrichtung 1e nach Art eines Stoßdämpfers gewisse Unebenheiten auf der Oberfläche des Rohrs 4e abfedern kann.

Zur Bearbeitung einer Kante des Rohrs 4e werden die Rollen 5e,6e auf die Außenseite des Rohrs 4e aufgesetzt und mittels des Gewindestifts 64e die Hebelarme 60e in eine derartige Position gebracht, dass die Rolle 70e ebenfalls auf der Außenseite des Rohrs 4e aufliegt. Anschließend wird mittels des Stellglieds 81 die Rolle 80 gegen die Innenseite des Rohrs 4e bewegt und so die Rollen 5e,6e,70e und 80 gegen das Rohr verspannt. Dann wird die Haltevorrichtung so weit auf die Rohrkante aufgesetzt, bis eine Stützfläche 31e eines Stützrings 30e der Handfräsmaschine 2e vollständig auf der Kante aufliegt. Danach wird die Fräsmaschine eingestellt und unter Rotation des Fräskopfs 13e durch Verdrehung eines rohrartigen Gehäuseabschnitts 32e gegenüber einem Rohrabschnitt 33e (wie oben beschrieben) der Fräskopf 13e unter Materialabtragung auf die Kante aufgesetzt und anschließend die Vorrichtung entlang der Kante des Rohrs 4e bewegt.

Zum Abnehmen der Vorrichtung von dem Rohr wird die Rolle 80e durch Betätigung des Stellgliedes 81 von der Innenseite des Rohrs gelöst.

Ist die Vorrichtung ohne die optionale Rolle 80 und deren Stellglied 81 vorgesehen, wird die Vorrichtung lediglich einseitig auf das Rohr aufgesetzt.

Es versteht sich, dass die Vorrichtungen nach den Fig. 7 bis 9 auch mit einem Schlitten 15 der Vorrichtung nach Fig. 1 versehen sein können. Der Fräskopf 13d,13f ist dann bezogen auf den Fräskopf 13d, 13f auch radial in eine Bearbeitungsposition bewegbar.

Fig. 10 zeigt eine weitere Ausführungsform der Erfindung, bei der die Vorrichtung nach Fig. 9 mit einer auf einem Rohr 4f aufzusetzendem Antriebsrolle 90 versehen ist, für die ein Kurbelantrieb 36f vorgesehen ist. Der Kurbelantrieb ist analog zu dem Antrieb 36 nach Fig. 5 aufgebaut. Er ist auf der einer Fräsmaschine 2f abgewandten Seite einer Haltevorrichtung 1f der Vorrichtung angeordnet.

In weiteren, hier nicht gezeigten Ausführungsbeispielen ist in den Vorrichtungen nach den Figuren 1 bis 9 anstatt des konischen Fräskopfs 13,13a,13b,13c,13d, 13e ein konischer Schleifkopf, ein zylindrischer Fräskopf oder ein zylindrischer Schleifkopf zur Bearbeitung der Innen- oder Außenseite des Rohrs an der Kante oder, falls Bearbeitungsmittel, z.B. eine Schleiffläche oder Schneidplatten auf der Grundfläche des zylindrischen Fräskopfs oder Schleifkopfs vorgesehen sind, zur Bearbeitung der Stirnfläche der Kante, vorgesehen.

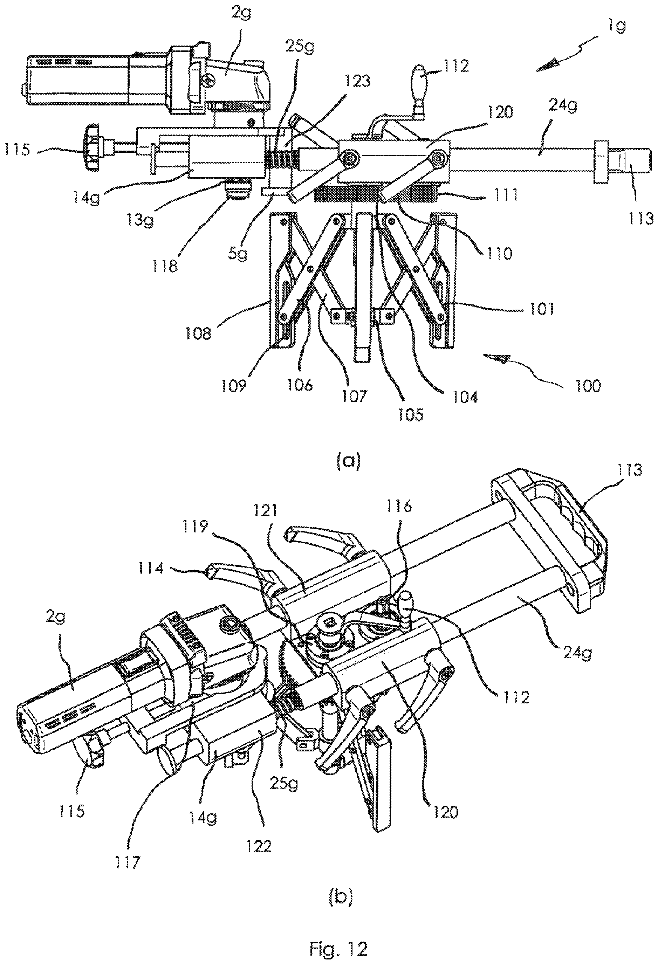

Eine weitere erfindungsgemäße Haltevorrichtung 1g ist in den Figuren 12 bis 14 gezeigt. Zur Befestigung der Haltevorrichtung 1g an einer Innenseite 9g eines Rohrs 4g kreisrunden Querschnitts ist, die Haltevorrichtung 1g mit einer Befestigungseinrichtung 100 versehen. Die Befestigungseinrichtung 100 umfasst drei Scherenspanner 101, die in radialer Richtung von einem Führungskörper vorstehen, der aus einem Führungsrohr 102 und einer in dem Führungsrohr 102 beweglich angeordneten Führungsstange 103 gebildet ist. Die Scherenspanner 101 sind an Enden ihrer Scherenschenkel 106 über Halteglieder 104 an dem Führungsrohr 102 befestigt und über Enden ihrer Scherenschenkel 107 an Halteglieder 105 mit der Führungsstange 103 verbunden. Die Führungsstange 103 ist in dem Bereich, in dem sie in dem Führungsrohr 102 angeordnet ist, mit einem hier nicht gezeigten Gewinde versehen, welches in ein Innengewinde des Rohrs 102 eingreift. Durch Drehung einer Kurbel 112, welche auf einen zur Aufnahme der Kurbel 112 vorgesehenen Zapfen, der mit der Stange 103 verbunden ist, aufsetzbar ist, lässt sich die Führungsstange 103 derart verschieben, dass sie dabei das Befestigungsglied 105 mitnimmt. Dadurch lassen sich Stützglieder 108 der Scherenspanner 101, die zur Anlage an der Rohrinnenseite 9g vorgesehen sind, unter Änderung der Winkel zwischen den Scherenschenkeln 106,107 in radialer Richtung bewegen, wobei Bolzen am anderen Ende der Scherenschenkel 106 in Langlöchern 109, die in den Stützgliedern 108 vorgesehen sind, gleiten.

Das Führungsrohr 102 ist über ein Drehlager 119 an einem Tragelement 120 der Haltevorrichtung 1g drehbar befestigt. Auf der Unterseite des Tragelements 120 ist an dem Führungsrohr 102 ein Zahnrad 110 befestigt, in das ein weiteres Zahnrad 111 eingreift, welches drehbar in dem Tragelement 120 gelagert ist. Das Zahnrad 111 ist mit einem Zapfen 116 verbunden, auf den die Kurbel 112 passend aufsteckbar ist. Bei Verdrehung des Zahnrads 111 wandert das Zahnrad 111 um das Zahnrad 110 herum und nimmt dabei das Tragelement 120 mit, sodass eine Drehbewegung um die Längsachse des Führungsrohrs 102 bzw. die Führungsstange 103 durchgeführt wird.

Das Tragelement 120 ist mit zwei Lagern 121 versehen, in denen Stangen 24g verschiebbar sind, die an ihren einen Enden über einen Griff 113 miteinander verbunden sind. An den Lagern 121 sind mit Griffen versehene Klemmschrauben 114 vorgesehen, mit denen sich die Stangen 24g in den Lagern 121 festklemmen lassen.

Die Stangen 24g weisen in einem Bereich auf einer Seite des Tragelements 120, die von dem Griff 113 abgewandt ist, einen verringerten Radius auf, wobei an einem Übergang zu dem geringen Radius Kanten gebildet sind. Im Bereich der geringeren Radii sind auf den Stangen 24g Spiralfedern 25g angeordnet. Die Spiralfedern 25g stützen sich mit ihren einen Enden an den Kanten ab und liegen mit ihren anderen Enden an Lagerelementen 122 eines Verbindungsteils 14g, das eine Fräsmaschine 2g trägt, an.

Eine drehbare Rolle 5g ist über eine Verbindungsstange 123 mit einem Verstellschlitten 117 des Verbindungsteils 14g in konstantem Abstand verbunden, dessen Position in dem Verbindungsteil 14g mittels eines Drehknaufs 115 einer Spindelverstellung in Richtung der Längsachsen der Stangen 24g verstellbar ist, um den Abstand der Rolle 5g zu dem Fräskopf 13g einstellen zu können.

Auf dem Fräskopf 13g ist eine drehbare Rolle 118 angeordnet, die einen zur Drehachse des Fräskopfs 13g koaxiale Drehachse aufweist und als Zustellungsbegrenzung für den Fräskopf 13g zum Rohr dient.

Zum Anordnen der Haltevorrichtung 1g an dem Rohr 4g werden zunächst die Klemmschrauben 114 gelöst, sodass die Stangen 24g in dem Tragelement 120 frei verschiebbar sind. Dann wird die Klemmeinrichtung 100 in das Rohr eingeführt und die Stangen 24g in den Lagern 121 so positioniert, dass das Verbindungsteil derart an der Kante angeordnet werden kann, dass die Rolle 5g an der Innenseite 9g des Rohrs anliegt und der Fräskopf 13g auf der Kante 3g aufsitzt.

Danach werden die Scherenspanner 101 unter Drehung der Kurbel 112 so weit ausgefahren, dass die Stützglieder 108 derart fest an der Rohrinnenseite 9g anliegen, sodass die Haltevorrichtung 1g durch die Befestigungseinrichtung 100 im Rohr 4g befestigt ist, und die Befestigungseinrichtung in dieser Position festgestellt.

Anschließend werden die Stangen 24 unter Angreifen an dem Griff 113 in Richtung zu der Fräsmaschine 2g hin gedrückt, sodass die Federn 25g mit Druck beaufschlagt werden und die Rolle 5g gegen die Rohrinnenseite 9g drücken. In dieser vorgespannten Stellung werden die Stangen 24g mittels der Klemmschrauben 114 an dem Tragelement 120 fixiert.

Anschließend wird die Position des Fräskopfs 13g im Verhältnis zu der Rolle 5g mittels des Drehknaufs 115 eingestellt, indem der Verstellschlitten 117 mit der Rolle 5g im Verhältnis zu dem Verbindungsteil 14g verschoben wird und ggf. mittels der oben für die anderen Ausführungsbeispiele beschriebenen Einstellung in Drehachsrichtung des Fräskopfs 13g, ggf. unter Materialabtrag bei eingeschalteter Fräsmaschine 2g, in seine Arbeitsposition gebracht wird.

Um auf der Rohrkante 3g mittels der Fräsmaschine 2g eine Fase einzubringen, wird die Kurbel 112 nun auf den Zapfen 116 des Zahnrads 111 aufgesetzt. Durch Drehung der Kurbel 112 und damit des Zahnrads 111 dreht sich das Tragelement 120 zusammen mit dem Verbindungsteil 122 und der Fräsmaschine 2g entlang der Kante des Rohrs 4g, wobei die Rolle 5g durch die Federn 25g stets gegen die Rohrinnenseite 9g gedrückt wird.

Vorteilhaft ist die mittels des Fräskopfs 13g vorgesehene Fase von der Form der Rohrinnenseite 9g abhängig, sodass sich zum einen Abweichungen des Rohrs 4g von einer kreisrunden Querschnittsform, zum anderen auch ggf. vorhandene Materialverdickungen, z.B. aufgrund von Schweißnähten, auf die Größe der gebildeten Fase ausbilden. Vorteilhaft wird damit erreicht, dass über den gesamten Umfang des Rohrs 4g an der Rohrkante 3g eine gleichgroße Materialstärke vorliegt. Dies ist für spätere an der Kante 3g vorzunehmende Schweißarbeiten vorteilhaft.

Es versteht sich, dass zum Anbringen einer Fase auf der Rohrinnenseite das Verbindungsteil 14g in einer zu den Fig. 12, 13 und 14 umgekehrten Position angeordnet sein könnte, d.h. mit der Rolle 5g auf der Außenseite des Rohrs 4g und dem Fräskopf 13g auf der Rohrinnenseite 9g. In diesem Fall müssten die Federn 25g allerdings mit ihren Enden mit den Stangen 24g bzw. dem Verbindungsteil 14g verbunden sein, sodass sie auf Zug beansprucht werden können.

In einer hier nicht gezeigten Ausführungsform ist die Position des Führungsrohrs 102 im Verhältnis zu dem Tragelement 120 in Richtung der Längsachse des Führungsrohrs 104 verstellbar, um eine Verstellung des Position in der Fräsmaschine 2g bzw. des Fräskopfs 13g in Richtung der Längsachse des Rohrs 4g zu ermöglichen. Dazu kann das Drehlager 119 über ein Gewinde in dem Tragelement 120 gelagert sein und sich dort in verschiedenen Stellungen blockieren lassen.

## Patentansprüche

1. Vorrichtung zum Halten einer Fräs- und/oder Schleifmaschine (2), insbesondere einer Handfräs- und/oder -schleifmaschine, in einer Position zur Bearbeitung einer Kante an einem Ende eines Rohres, die zumindest eine drehbare Rolle (5,6,7) aufweist, die an der Rohrinnenseite oder der Rohraußenseite anlegbar ist und mittels derer ein Verbindungsteil (14) der Haltevorrichtung (1), an dem sich ein Gehäuse der Fräs- und/oder Schleifmaschine (2) anordnen lässt, entlang der Kante (3) bewegbar ist, **dadurch gekennzeichnet,**
**dass** die Haltevorrichtung (1) zur drehbaren Lagerung der Fräs- und/oder Schleifmaschine (2) im Verhältnis zu der Haltevorrichtung (1) um dieselbe Achse, um die ein in der Haltevorrichtung (1) anzuordnender Fräs- oder Schleifkopf der Fräs- und/oder Schleifmaschine (2) drehbar ist, unter Bearbeitung der Kante in der Bearbeitungsposition vorgesehen ist.

2. Vorrichtung nach Anspruch 1,
**dadurch gekennzeichnet,**
**dass** die Haltevorrichtung (1) zumindest zwei der Rollen (5,6,7) aufweist und die Rollen (5,6,7) gleichzeitig an der Rohrinnenseite (9) und/oder der Rohraußenseite (10) anlegbar sind.

3. Vorrichtung nach Anspruch 1 oder 2,
**dadurch gekennzeichnet,**
**dass** der Abstand der Rollen (5,6,7) voneinander, vorzugsweise stufenlos, verstellbar ist.

4. Vorrichtung nach einem der Ansprüche 1 bis 3,
**dadurch gekennzeichnet,**
**dass** die Haltevorrichtung (1) eine Verstelleinrichtung (18) zur Anordnung der zumindest einen Rolle (5,6,7) unter Spannung an dem Rohr (4) aufweist.

5. Vorrichtung nach Anspruch 4,
**dadurch gekennzeichnet,**
**dass** die Verstelleinrichtung (18) zur Anordnung zumindest zweier der Rollen (5,6,7) unter Spannung, vorzugsweise unter Spannung gegeneinander, an dem Rohr (4) aufweist, wobei vorzugsweise mittels der Verstelleinrichtung (18) der Abstand der Rollen (5,6,7) verstellbar ist.

6. Vorrichtung nach Anspruch 4 oder 5,
**dadurch gekennzeichnet,**
**dass** die Verstelleinrichtung (18) einen Hebelarm (60), der zumindest eine der Rollen (5,6,7) trägt und im Verhältnis zu der anderen Rolle (5,6,7) bzw. den anderen Rollen (5,6,7) bewegbar ist, umfasst.

7. Vorrichtung nach einem der Ansprüche 4 bis 6,
**dadurch gekennzeichnet,**
**dass** die Verstelleinrichtung (18) zumindest zwei an einem Schlitten (15) der Haltevorrichtung (1) angeordnete Trägerelemente (16,17) aufweist, an denen zumindest je eine der Rollen (5,6,7) befestigt ist, und deren Abstand zueinander, vorzugsweise translatorisch, verstellbar ist.

8. Vorrichtung nach einem der Ansprüche 5 bis 7,
**dadurch gekennzeichnet,**
**dass** die Verstelleinrichtung (18) eine Feder (23,25) aufweist, mittels derer die Rollen (5,6,7) unter der Spannung an dem Rohr (4) anlegbar sind.

9. Vorrichtung nach einem der Ansprüche 7 oder 8,
**dadurch gekennzeichnet,**
**dass** der Abstand zwischen dem Schlitten (15) und dem Verbindungsteil (14) verstellbar ist.

10. Vorrichtung nach einem der Ansprüche 1 bis 9,
**gekennzeichnet durch** eine Einrichtung (100) zur Befestigung der Haltevorrichtung (1g) an der Rohrinnenseite (9g), die vorzugsweise zur Verklemmung der Haltevorrichtung (1g) an der Rohrinnenseite (9g) vorgesehen ist.

11. Vorrichtung nach einem der Ansprüche 1 bis 10,
**dadurch gekennzeichnet,**
**dass** die Position des Verbindungsteils (14g) in der Haltevorrichtung (1g) in Richtung der Rohrsymmetrieachse und/oder in Richtung senkrecht dazu verstellbar ist.

12. Vorrichtung nach einem der Ansprüche 1 bis 11,
**gekennzeichnet durch** ein Mittel (110,111,112) zur Drehung des Verbindungsteils (14g) um die Rohrsymmetrieachse.

13. Vorrichtung einem der Ansprüche 1 bis 12,
**dadurch gekennzeichnet,**
**dass** zur Abstützung der Vorrichtung in Richtung der Rohrachse gegen die Kante (3) eine Kantenrolle (11,12) und/oder eine Stützfläche (31) vorgesehen ist.

14. Vorrichtung nach einem der Ansprüche 1 bis 13,
**dadurch gekennzeichnet,**
**dass** die Position des Fräs- und/oder Schleifkopfs (13) in der Haltevorrichtung (1), vorzugsweise in Richtung der Symmetrieachse des Rohrs und/oder der Drehachse des Fräskopfs (13) oder des Schleifkopfs und/oder senkrecht dazu, verstellbar ist.

15. Vorrichtung nach einem der Ansprüche 1 bis 14,
**dadurch gekennzeichnet,**
**dass** die Vorrichtung eine Rolle (70,70e) umfasst, die auf dem Fräskopf (13,13e) angeordnet ist.

## Claims

1. Apparatus for holding a milling and/or grinding machine (2), in particular a hand-held milling and/or grinding machine, in a position for machining an edge at an end of a pipe, said apparatus having at least one rotatable roller (5, 6, 7) which can be applied to the pipe inner side or the pipe outer side and by means of which a connecting part (14) of the holding apparatus (1), on which connecting part a housing of the milling and/or grinding machine (2) can be arranged, is movable along the edge (3),
**characterized**
**in that** the holding apparatus (1) is provided for rotatably mounting the milling and/or grinding machine (2) in relation to the holding apparatus (1) about the same axis about which there can be rotated a milling or grinding head, which is to be arranged in the holding apparatus (1), of the milling and/or grinding machine (2), while machining the edge in the machining position.

2. Apparatus according to Claim 1,
**characterized**
**in that** the holding apparatus (1) has at least two of the rollers (5, 6, 7), and the rollers (5, 6, 7) can be simultaneously applied to the pipe inner side (9) and/or the pipe outer side (10).

3. Apparatus according to Claim 1 or 2,
**characterized**
**in that** the distance of the rollers (5, 6, 7) from one another is adjustable, preferably in a stepless manner.

4. Apparatus according to one of Claims 1 to 3,
**characterized**
**in that** the holding apparatus (1) has an adjusting device (18) for arranging the at least one roller (5, 6, 7) with clamping on the pipe (4).

5. Apparatus according to Claim 4,
**characterized**
**in that** the adjusting device (18) has for arranging at least two of the rollers (5, 6, 7) with clamping, preferably with mutual clamping, on the pipe (4), wherein preferably the distance between the rollers (5, 6, 7) is adjustable by means of the adjusting device (18).

6. Apparatus according to Claim 4 or 5,
**characterized**
**in that** the adjusting device (18) comprises a lever arm (60) which bears at least one of the rollers (5, 6, 7) and is movable in relation to the other roller (5, 6, 7) or the other rollers (5, 6, 7).

7. Apparatus according to one of Claims 4 to 6,
**characterized**
**in that** the adjusting device (18) has at least two carrier elements (16, 17) which are arranged on a carriage (15) of the holding apparatus (1) and on which at least in each case one of the rollers (5, 6, 7) is fastened, and the distance thereof from one another is adjustable, preferably translationally.

8. Apparatus according to one of Claims 5 to 7,
**characterized**
**in that** the adjusting device (18) has a spring (23, 25) by means of which the rollers (5, 6, 7) can be applied to the pipe (4) with the clamping action.

9. Apparatus according to either of Claims 7 and 8,
**characterized**
**in that** the distance between the carriage (15) and the connecting part (14) is adjustable.

10. Apparatus according to one of Claims 1 to 9,
**characterized by** a device (100) for fastening the holding apparatus (1g) to the pipe inner side (9g), which device is preferably provided for clamping the holding device (1g) on the pipe inner side (9g).

11. Apparatus according to one of Claims 1 to 10,
**characterized**
**in that** the position of the connecting part (14g) in the holding apparatus (1g) is adjustable in the direction of the pipe axis of symmetry and/or in a direction perpendicular thereto.

12. Apparatus according to one of Claims 1 to 11,
**characterized by** a means (110, 111, 112) for rotating the connecting part (14g) about the pipe axis of symmetry.

13. Apparatus according to one of Claims 1 to 12,
**characterized**
**in that** an edge roller (11, 12) and/or a support surface (31) are/is provided for supporting the apparatus in the direction of the pipe axis against the edge (3).

14. Apparatus according to one of Claims 1 to 13,
**characterized**
**in that** the position of the milling and/or grinding head (13) is adjustable in the holding apparatus (1), preferably in the direction of the axis of symmetry of the pipe and/or of the axis of rotation of the milling head (13) or of the grinding head and/or perpendicular thereto.

15. Apparatus according to one of Claims 1 to 14,
**characterized**
**in that** the apparatus comprises a roller (70, 70e) which is arranged on the milling head (13, 13e).

## Revendications

1. Dispositif de maintien d'une machine à fraiser et/ou à meuler (2), en particulier d'une machine à fraiser et/ou à meuler manuelle, dans une position permettant d'usiner un bord à une extrémité d'un tube, comprenant au moins un galet rotatif (5, 6, 7) qui peut être appliqué contre la face intérieure ou la face extérieure du tube et au moyen duquel une partie de raccordement (14) du dispositif de maintien (1), sur laquelle un boîtier de la machine à fraiser et/ou à meuler (2) peut être disposé, peut être déplacée le long dudit bord (3),
**caractérisé en ce que**
le dispositif de maintien (1) est prévu pour supporter en rotation la machine à fraiser et/ou à meuler (2) par rapport au dispositif de maintien (1) autour du même axe autour duquel une tête de fraisage ou de meulage de la machine à fraiser et/ou à meuler (2) à disposer dans le dispositif de maintien (1) peut tourner, tout en usinant le bord dans la position d'usinage.

2. Dispositif selon la revendication 1,
**caractérisé en ce que**
le dispositif de maintien (1) comprend au moins deux galets (5, 6, 7) et les galets (5, 6, 7) peuvent être appliqués simultanément contre la face intérieure (9) et/ou la face extérieure (10) du tube.

3. Dispositif selon la revendication 1 ou 2,
**caractérisé en ce que**
la distance des galets (5, 6, 7) les uns des autres est réglable de préférence en continu.

4. Dispositif selon l'une des revendications 1 à 3,
**caractérisé en ce que**
le dispositif de maintien (1) comprend un moyen de réglage (18) pour agencer ledit au moins un galet (5, 6, 7) sous contrainte sur le tube (4).

5. Dispositif selon la revendication 4,
**caractérisé en ce que**
le moyen de réglage (18) comprend au moins deux des galets (5, 6, 7) sous contrainte, de préférence sous contrainte l'un contre l'autre sur le tube (4), de préférence la distance des galets (5, 6, 7) étant réglable à l'aide du moyen de réglage (18).

6. Dispositif selon la revendication 4 ou 5,
**caractérisé en ce que**
le moyen de réglage (18) comprend un bras de levier (60) qui porte au moins l'un des galets (5, 6, 7) et qui est mobile par rapport à l'autre galet (5, 6, 7) ou aux autres galets (5, 6, 7).

7. Dispositif selon l'une des revendications 4 à 6,
**caractérisé en ce que**
le moyen de réglage (18) comprend au moins deux éléments porteurs (16, 17) disposés sur un chariot (15) du dispositif de maintien (1), sur lesquels peut être fixé respectivement au moins l'un des galets (5, 6, 7) et dont la distance l'un de l'autre est réglable de préférence par translation.

8. Dispositif selon l'une des revendications 5 à 7,
**caractérisé en ce que**
le moyen de réglage (18) comprend un ressort (23, 25) à l'aide duquel les galets (5, 6, 7) peuvent être appliqués sous contrainte contre le tube (4).

9. Dispositif selon l'une des revendications 7 ou 8,
**caractérisé en ce que**
la distance entre le chariot (15) et la partie de raccordement (14) est réglable.

10. Dispositif selon l'une des revendications 1 à 9,
**caractérisé par**
un moyen (100) de fixation du dispositif de maintien (1g) contre la face intérieure (9g) du tube, qui est prévu de préférence pour coincer le dispositif de maintien (1g) contre la face intérieure (9g) du tube.

11. Dispositif selon l'une des revendications 1 à 10,
**caractérisé en ce que**
la position de la partie de raccordement (14g) dans le dispositif de maintien (1g) est réglable en direction de l'axe de symétrie du tube et/ou en direction perpendiculaire à celui-ci.

12. Dispositif selon l'une des revendications 1 à 11,
**caractérisé par**
un moyen (110, 111, 112) pour faire tourner la partie de raccordement (14g) autour de l'axe de symétrie du tube.

13. Dispositif selon l'une des revendications 1 à 12,
**caractérisé en ce que**
pour soutenir le dispositif en direction de l'axe du tube contre le bord (3), il est prévu un galet de bord (11, 12) et/ou une surface de soutien (31).

14. Dispositif selon l'une des revendications 1 à 13,
**caractérisé en ce que**
la position de la tête de fraisage et/ou de meulage (13) dans le dispositif de maintien (1) est réglable de préférence en direction de l'axe de symétrie du tube et/ou de l'axe de rotation de la tête de fraisage (13) ou de la tête de meulage et/ou perpendiculairement à celui-ci.

15. Dispositif selon l'une des revendications 1 à 14,
**caractérisé en ce que**
le dispositif comprend un galet (70, 70e) qui est disposé sur la tête de fraisage (13, 13e).
